# EUROPÄISCHE PATENTANMELDUNG

(11) **EP 3 650 377 A1**
(43) Veröffentlichungstag der Anmeldung: **13.05.2020**
(21) Anmeldenummer: 19212011.1
(22) Anmeldetag: 11.10.2017
(51) Int. Cl.: B65G 21/12, B65G 41/00, B02C 23/02, B60P 1/36, B60P 3/00, B02C 21/02

(54) **FÖRDERBANDANORDNUNG EINER MATERIAL-VERARBEITUNGSEINRICHTUNG**

(30) Priorität: 18.10.2016 DE 102016119856
(62) Teilanmeldung aus: 17783479.3
(71) Anmelder: KLEEMANN GMBH, 73037 Göppingen (DE)
(72) Erfinder: KÖPF, Reiner, 73333 Gingen an der Fils (DE); LEBENDER, Frank, 73344 Gruibingen (DE); GEYWITZ, Tobias, 73054 Eislingen (DE)
(74) Vertreter: Herrmann, Jochen

(57) **Zusammenfassung**

Die Erfindung betrifft eine Förderbandanordnung einer Material-Verarbeitungseinrichtung mit einem Förderband und einem Aufnahme- und Einstellmechanismus zur Verstellung des Förderbandes zwischen einer Transport- und einer Arbeitsstellung. Dazu ist das Förderband auf Lagerungselementen gelagert, welche drehbar mit Aufnahmeelementen des Aufnahme- und Einstellmechanismus verbunden sind. Es ist vorgesehen, dass die Aufnahmeelemente jeweils an eine Schwenklagerung mit je einer Schwenkachse zur schwenkbaren Befestigung an der Material-Verarbeitungseinrichtung angekoppelt sind, und dass zwischen dem Förderband und der Schwenklagerung zumindest eines Aufnahmeelements ein Ausgleichsmechanismus vorgesehen ist, mit dem eine Abstandsänderung zwischen den Lagerungselementen ausgleichbar ist. Die Förderbandanordnung ermöglicht die einfache Verstellung des Förderbandes einer Material-Verarbeitungseinrichtung zwischen einer Arbeits- und einer Transportposition.

## Beschreibung

Die Erfindung betrifft eine Förderbandanordnung einer Material-Verarbeitungseinrichtung mit einem Förderband und einem Aufnahme- und Einstellmechanismus des Förderbandes, wobei das Förderband einen Aufgabebereich und einen Abwurfbereich aufweist, wobei das Förderband mit dem Aufnahme- und Einstellmechanismus zwischen einer Arbeitsposition und einer Transportposition schwenkbar an der Material-Verarbeitungseinrichtung befestigbar ist, wobei das Förderband auf zumindest zwei Lagerungselementen des Aufnahme- und Einstellmechanismus gelagert ist und wobei die Lagerungselemente mittelbar oder unmittelbar an jeweils einem Aufnahmeelement des Aufnahme- und Einstellmechanismus um Drehachsen drehbar gelagert sind.

Aus der EP 2 756 887 A1 ist eine Material-Bearbeitungseinrichtung mit einem Förderband bekannt. Das Förderband ist schwenkbar an der Material-Verarbeitungseinrichtung befestigt. Dazu liegt das Förderband abwurfseitig auf einem um eine vertikal ausgerichtete Achse schwenkbar gelagerten Balken auf. Das Förderband ist um eine horizontal verlaufende Drehachse schwenkbar und ortsfest mit dem Querbalken verbunden. Damit kann sowohl die seitliche Ausrichtung des Förderbandes gegenüber der Material-Bearbeitungseinrichtung als auch dessen Neigung eingestellt werden. Aufgabeseitig ist das Förderband von einer mit der Material-Verarbeitungseinrichtung verbundenen, ausziehbaren Abstützung gehalten. Die Abstützung ist um zwei senkrecht zueinander stehende Achsen schwenkbar an der Material-Verarbeitungseinrichtung befestigt. Damit kann die Abstützung sowohl in einer horizontal als auch in einer vertikal verlaufenden Ebene geschwenkt werden. Endseitig ist die Abstützung über ein Drehlager ortsfest mit dem Förderband verbunden. Das Drehlager ist dabei quer zur Längserstreckung des Förderbandes ausgerichtet. Die Anordnung ermöglicht es, das Förderband in einer Transportstellung an die Material-Bearbeitungseinrichtung anzuklappen und in einer Arbeitsposition seitlich abstehend von dieser auszurichten. Dabei kann das Förderband in der Transportstellung endseitig abgeklappt und damit in seiner Länge reduziert werden. Nachteilig muss zum Verstellen des Förderbandes zwischen seiner Transportstellung und seiner Arbeitsposition sowie zur Einstellung der Neigung des Förderbandes die Länge der Abstützung verändert werden. Die Abstützung muss daher ausziehbar ausgeführt werden. Dies ist mechanisch aufwendig und erfordert zusätzliche Komponenten, beispielsweise in Form entsprechender Hydraulikzylinder. Weiterhin muss die Abstützung einen großen Abstand zwischen dem Chassis der Material-Bearbeitungseinrichtung und der aufgabeseitigen Lagerposition des Förderbandes überbrücken und bildet damit einen langen Hebel. Aufgrund der erforderlichen Längeneinstellung kann keine mehrachsige Tragekonstruktion als Abstützung vorgesehen werden, welche an zwei beabstandeten Haltepunkten mit dem Chassis der Material-Bearbeitungseinrichtung verbunden ist. Damit müssen die durch die Gewichtskraft des Förderbandes und des Transportgutes auf die Abstützung einwirkenden Kräfte durch einen einarmigen Hebelarm an einem drehbar ausgeführten Haltepunkt am Chassis der Material-Bearbeitungseinrichtung abgefangen werden. Die Abstützung und deren Lagerung am Chassis müssen entsprechend massiv ausgebildet werden, wobei aufgrund des langen Hebelarms dennoch die maximale Belastbarkeit des Förderbandes in seinem Aufnahmebereich stark eingeschränkt ist. Dies schränkt insbesondere die Anwendbarkeit des Förderbandes zur Bestückung der Material-Verarbeitungseinrichtung mit schweren Geröll und Gesteinsbrocken stark ein.

Es ist Aufgabe der Erfindung, eine Förderbandanordnung einer Material-Verarbeitungseinrichtung mit einem Förderband und einem Aufnahme- und Einstellmechanismus des Förderbandes bereitzustellen, welche eine einfache Verstellung und Positionierung des Förderbandes zwischen einer Transportstellung und einer Arbeitsstellung und gleichzeitig eine hohe Belastbarkeit des Förderbandes ermöglicht.

Die Aufgabe der Erfindung wird dadurch gelöst, dass die Aufnahmeelemente jeweils an eine Schwenklagerung mit je einer Schwenkachse zur schwenkbaren Befestigung an der Material-Verarbeitungseinrichtung angekoppelt sind, und dass zwischen dem Förderband und der Schwenklagerung zumindest eines Aufnahmeelements ein Ausgleichsmechanismus vorgesehen ist, mit dem eine Abstandsänderung zwischen den Lagerungselementen ausgleichbar ist. Dabei ist im Sinne der Erfindung eine Schwenklagerung mit der zugeordneten Schwenkachse die Lagerung bzw. die Achse, um welche ein Aufnahmeelement gegenüber der Material-Bearbeitungseinrichtung schwenkbar ist. Drehachsen sind im Sinne der Erfindung Achsen, um welche die Lagerungselemente gegenüber den Aufnahmeelementen dreh- oder schwenkbar sind. Durch Schwenken der Aufnahmeelemente werden die daran angekoppelten Lagerungselemente auf je einem Teilabschnitt einer Kreisbahn um die jeweilige Schwenkachse geschwenkt. Die Lagerungselemente können so an die Material-Verarbeitungseinrichtung herangeklappt oder von dieser weggeklappt werden. Dadurch wird auch das Förderband entsprechend mit bewegt. Durch Schwenken des aufgabeseitigen Aufnahmeelements wird der Aufgabebereich des Förderbandes von der Material-Verarbeitungseinrichtung weggeschwenkt oder an diese herangeklappt. Beim Ausklappen des aufgabeseitigen Aufnahmeelements dreht sich dabei das Förderband derart, dass der Aufgabebereich seitlich von der Material-Bearbeitungseinrichtung wegstehend angeordnet ist. Das abwurfseitige Lagerungselement ist vorzugsweise beabstandet zum abwurfseitigen Ende des Förderbandes angeordnet. Beim Ausschwenken des aufgabeseitigen Endes des Förderbandes bewegt sich somit dessen abwurfseitiges Ende über die Material-Verarbeitungsmaschine und kann dort entsprechend positioniert werden. Durch Schwenken des abwurfseitigen Aufnahmeelements kann die Position des Abwurfbereichs des Förderbandes gegenüber der Material-Verarbeitungseinrichtung verändert werden. Durch das linear verstellbar mit dem Förderband verbundene Lagerungselement oder den Ausgleichsmechanismus können die Aufnahmeelemente unabhängig voneinander geschwenkt werden. Die dadurch bewirkte Abstandsänderung der Lagerungselemente zueinander wird durch den Ausgleichsmechanismus ausgeglichen.

Zusätzlich kann es auch vorgesehen sein, dass zumindest ein Lagerungselement linear verstellbar mit dem Förderband verbunden ist. Auch hierdurch kann ein Ausgleich der Abstandsänderung erfolgen.

Durch die unabhängig voneinander schwenkbaren Aufnahmeelemente ist es möglich, sowohl den Aufgabebereich als auch den Abwurfbereich des Förderbandes entsprechend den jeweiligen Einsatzbedingungen separat einzustellen. Beispielsweise kann der Aufgabebereich des Förderbandes zum Auswurf einer weiteren, vorgeschalteten Material-Verarbeitungseinrichtung hin ausgerichtet werden, während das abwurfseitige Ende des Förderbandes über einem Haupt-Aufgabetrichter der Material-Verarbeitungseinrichtung positioniert wird. Material der vorgeschalteten Material-Verarbeitungseinrichtung wird dann über das Förderband zu dem Haupt-Aufgabetrichter transportiert, von diesem aufgefangen und über ein Aufgabeband zu einem Brecher der Material-Bearbeitungseinrichtung befördert.

Die Winkeländerungen der Aufnahmeelemente gegenüber dem Förderband beim Ein- bzw. Ausklappen werden durch die drehbare Lagerung der Lagerungselemente ausgeglichen und damit ermöglicht.

Zur Verstellung der Ausrichtung des Förderbandes ist es nicht erforderlich, die Länge eines Aufnahmeelements, auf dem das Förderband über die Lagerungselemente gelagert ist, zu verstellen. Damit können mehrachsige und damit mechanisch stark belastbare Aufnahmeelemente vorgesehen werden. Weiterhin können die Aufnahmeelemente an zwei oder mehreren beabstandet angeordneten Auflagepunkten mit der Material-Verarbeitungseinrichtung schwenkbar verbunden werden. Dadurch können hohe Kräfte von den Aufnahmeelementen abgefangen und auf ein Chassis der Material-Verarbeitungseinrichtung übertragen werden.

Entsprechend einer bevorzugten Ausgestaltungsvariante der Erfindung ist es vorgesehen, dass zumindest ein Lagerungselement ortsfest mit dem Förderband verbunden ist. Das Förderband ist somit linear gehalten. Es müssen keine zusätzlichen Befestigungselemente vorgesehen werden, um ein unbeabsichtigtes lineares Verschieben des Förderbandes zu unterbinden. Der erforderliche Längenausgleich beim Schwenken der Aufnahmeelemente kann dann durch das zumindest eine linear verstellbar mit dem Förderband verbunden Lagerungselement ausgeglichen werden.

Um in der Arbeitsposition des Förderbandes dessen Aufgabebereich von der Material-Verarbeitungseinrichtung seitlich wegstehend und den Abwurfbereich über der Material-Verarbeitungseinrichtung anzuordnen kann es vorgesehen sein, dass das zum Aufgabebereich hin angeordnete, aufgabeseitige Lagerungselement auf einem größeren Radius um die aufgabeseitige Schwenkachse schwenkbar angeordnet ist als das zum Abwurfbereich hin ausgerichtete, abwurfseitige Lagerungselement um die abwurfseitige Schwenkachse. Durch Ausschwenken der Aufnahmeelemente kann so das aufgabeseitige Lagerungselement weiter seitlich beabstandet zu der Material-Verarbeitungseinrichtung positioniert werden als das abwurfseitige Lagerungselement. Dadurch kann eine gegenüber der Material-Verarbeitungseinrichtung schräge verlaufende Ausrichtung des Förderbandes eingestellt werden.

Eine leichtgängige lineare Verstellbarkeit des Förderbandes gegenüber zumindest einem Lagerungselement kann dadurch erreicht werden, dass das linear verstellbar mit dem Förderband verbundene Lagerungselement dem Förderband zugewandt Führungsrollen aufweist, auf denen das Förderband gelagert ist.

Das Förderband kann dadurch getragen und seitlich geführt werden, dass die Führungsrollen Laufflächen aufweisen, auf denen das Förderband gelagert ist, und/oder dass die Führungsrollen Spurkränze aufweisen, an denen das Förderband seitlich geführt ist.

Um zu vermeiden, dass das Förderband, beispielsweise durch äußere Krafteinwirkungen oder bei einer schweren Beladung in einem Endbereich des Förderbandes außerhalb des von den Lagerungselementen eingegrenzten Bereichs, von dem linear verstellbar mit dem Förderband verbundenen Lagerungselement abgehoben wird kann es vorgesehen sein, dass seitlich an dem Förderband gegenüberliegend zumindest abschnittsweise Führungsschienen angeordnet sind und dass an dem linear verstellbar mit dem Förderband verbundenen Lagerungselement Führungsklammern angeordnet sind, welche die Führungsschienen zumindest teilweise umgreifen.

Eine Anpassung der Führungsklammern an unterschiedliche Neigungswinkel des Förderbandes kann dadurch erfolgen, dass die Führungsklammern um eine quer zur Längserstreckung der Führungsschiene verlaufenden Achse in ihrem Winkel gegenüber dem Lagerungselement einstellbar sind. Dadurch wird ein Verklemmen der Führungsschiene und damit des Förderbandes an den Führungsklammern bei veränderter Neigung des Förderbandes sicher vermieden.

Eine Verstellung der Neigung des Förderbandes wird dadurch ermöglicht, dass das Förderband über eine quer zu den Drehachsen der Lagerungselemente verlaufende Achse schwenkbar mit dem zumindest einen ortsfest mit dem Förderband verbundenen Lagerungselement verbunden ist.

Beim Schwenken der Aufnahmeelemente ändert sich deren Winkel gegenüber dem Förderband, was durch die drehbare Lagerung der Lagerungselemente ausgeglichen wird. Eine leichtgängige und dennoch mechanisch stark belastbare Drehlagerung der Lagerungselemente kann dadurch erreicht werden, dass zwischen den Lagerungselementen und dem jeweiligen Aufnahmeelement eine als Gleitlager ausgebildete Drehlagerverbindung angeordnet ist und/oder dass zwischen den Lagerungselementen und dem jeweiligen Aufnahmeelement aneinanderliegende Gleitscheiben angeordnet sind. Die Gleitscheiben sind vorzugsweise aus einem Material gefertigt, welches zueinander einen geringen Reibungskoeffizienten aufweist.

Entsprechend einer bevorzugten Ausgestaltungsvariante der Erfindung kann es vorgesehen sein, dass die Lagerungselemente mittelbar oder unmittelbar an jeweils einem Schwenkarm eines jeweiligen Aufnahmeelements drehbar befestigt sind und dass der Abstand zwischen zumindest einem Lagerungselement und einem zugeordneten Schwenkarm veränderbar ist. Vorzugsweise kann dabei der Abstand zwischen dem zumindest einen Lagerungselement und dem zugeordneten Schwenkarm in Richtung der Drehachse des Lagerungselements veränderbar sein. Durch eine solche Abstandsänderung kann der Neigungswinkel des Förderbandes eingestellt werden. Durch eine Änderung des Neigungswinkels kann beispielsweise die Höhe des Aufgabebereichs an die Abwurfhöhe eines Förderbandes einer vorangeschalteten Material-Verarbeitungseinrichtung, deren ausgeworfenes Material weiter verarbeitet werden soll, angepasst werden. Weiterhin kann die Höhe des Abwurfbereichs des Förderbandes gegenüber der Material-Verarbeitungseinrichtung eingestellt werden.

Eine einfache Einstellung des Neigungswinkels des Förderbandes kann dadurch erreicht werden, dass der Abstand zwischen dem zumindest einen Lagerungselement und dem zugeordneten Schwenkarm durch Ein- und Ausbau zumindest eines Zwischenstücks und/oder mittels zumindest eines Aktuators veränderbar ist. Die Verwendung von Zwischenstücken ist dabei kostengünstig und führt zu einer mechanisch stark belastbaren Abstützung des Förderbandes. Aktuatoren, beispielsweise in Form von Hydraulikzylindern, ermöglichen eine kontinuierliche Einstellung des Abstandes zwischen dem zumindest einen Lagerungselement und dem zugeordneten Schwenkarm und damit der Neigung des Förderbandes.

Zum Ein- und Ausschwenken des Förderbandes durch entsprechendes Schwenken der Aufnahmeelemente müssen die Lagerungselemente drehbar mit den Aufnahmeelementen verbunden sein. Um dies bei unterschiedlichen Neigungswinkeln des Förderbandes zu ermöglichen kann es vorgesehen sein, dass die Drehlagerverbindung bei eingebautem Zwischenstück zwischen dem zumindest einen Lagerungselement und dem Zwischenstück und bei ausgebautem Zwischenstück zwischen dem zumindest einen Lagerungselement und dem zugeordneten Schwenkarm ausgebildet ist. Vorzugsweise sind die Drehlagerverbindungen gleich aufgebaut. Dadurch kann das Lagerungselement ohne bauliche Anpassung sowohl auf dem Zwischenstück als auch auf dem zugeordneten Schwenkarm drehbar montiert werden.

Um die Aufnahmeelemente um deren Schwenkachsen einfach und mit geringem Kraftaufwand schwenken und damit das Förderband Ein- oder Ausklappen zu können kann es vorgesehen sein, dass an zumindest einem Aufnahmeelement zumindest ein Stellelement, insbesondere eine Linearaktuator und/oder zumindest eine in ihrer Länge verstellbare Kette und/oder zumindest ein in seiner Länge verstellbares Seil, und/oder zumindest ein in seiner Länge verstellbarer Zug-/Druckstab zur Schwenkung des Aufnahmeelements um die Schwenkachse angeordnet ist. Der Linearaktuator kann beispielsweise elektrisch, pneumatisch oder hydraulisch angetrieben sein. Eine Kette kann einen Ratschenspanner aufweisen, mit dem die Länge der Kette einstellbar ist und womit hohe Kräfte zur Verstellung der Aufnahmeelemente aufgebracht werden können. Einem Seil kann beispielsweise ein Flaschenzug zugeordnet sein, um die zur Verstellung der Aufnahmeelemente erforderlichen Kräfte aufzubringen. Der Zug-/Druckstab kann beispielsweise in Form eines manuell oder hydraulisch einstellbaren Oberlenkers ausgeführt sein. Vorteilhaft wird bei einem solchen Zug-/Druckstab oder einem in seiner Länge einstellbaren Linearaktuator nur ein solches Stellelement benötigt, um das Aufnahmeelement in beide Schwenkrichtungen zu bewegen und in seiner gewünschten Schwenkposition zu halten. Bei Verwendung einer Kette oder eines Seils, welche jeweils nur in Zugrichtung wirksam sind, sind jeweils zumindest zwei solcher Stellelemente erforderlich, welche in entgegengesetzte Richtungen auf das jeweilige Aufnahmeelement einwirken.

Die Schwenkung der Aufnahmeelemente und gleichzeitige Drehung der Lagerungselemente zur Anpassung der durch die Schwenkung veränderten Winkel zwischen den Aufnahmeelementen und dem Förderband kann dadurch ermöglicht werden, dass die Drehachsen der Lagerungselemente in Richtung der Schwenkachsen der Aufnahmeelemente ausgerichtet sind. Beim Schwenken der Aufnahmeelemente werden so die Lagerungselemente und deren Drehachsen um die Schwenkachsen der Aufnahmeelemente geschwenkt. Gleichzeitig werden die Lagerungselemente entsprechend der Ausrichtung des mit ihnen verbundenen Förderbandes um ihre Drehachsen gedreht.

Um ein versehentliches Verstellen des Förderbandes nach erfolgter Ausrichtung zu vermeiden kann es vorgesehen sein, dass die Schwenkbewegung zumindest eines Aufnahmeelements blockierbar ist. Dazu kann es beispielsweise vorgesehen sein, dass das zumindest eine Aufnahmeelement über Bolzen zu einem Chassis der Material-Verarbeitungseinrichtung absteckbar ist. Vorzugsweise kann sowohl die Schwenkbewegung des aufgabeseitigen als auch des abwurfseitigen Aufnahmeelements blockierbar sein.

Ein einfacher Aufbau der Förderbandanordnung kann dadurch erreicht werden, dass das aufgabeseitige Lagerungselement linear verstellbar mit dem Förderband verbunden ist und/oder dass das der Abstand zwischen dem aufgabeseitigen Lagerungselement und dem aufgabeseitigen Schwenkarm veränderbar ist.

Der Ausgleichsmechanismus zum Ausgleich der Abstandsänderung zwischen den Lagerungselementen kann dadurch einfach bereitgestellt werden, dass zumindest ein Aufnahmeelement eine Ausgleichs-Gelenkverbindung aufweist, mit der ein der Schwenklagerung abgewandter Abschnitt des Aufnahmeelements gegenüber einem der Schwenklagerung zugewandten Abschnitt geschwenkt werden kann. Das zumindest eine Aufnahmeelement ist somit in sich klappbar. Vorzugsweise ist eine durch die Ausgleichs-Gelenkverbindung gebildete Ausgleichs-Schwenkachse in die gleiche Richtung wie die Schwenkachsen der Aufnahmeelemente und die Drehachsen der Lagerungselemente ausgerichtet. Das Aufnahmeelement wird somit um seine Schwenkachse zwischen der Transport- und Arbeitsposition geschwenkt, wobei sich das zugeordnete Lagerungselement entsprechend der Ausrichtung des Förderbandes um seine Drehachse dreht. Der Längenausgleich erfolgt durch ein Ein- bzw. Ausklappen des Aufnahmeelements an seiner Ausgleichs-Gelenkverbindung. Dadurch ändert sich der Abstand zwischen der Schwenk- und der Drehachse des Aufnahmeelements und des Lagerungselements. Beim Ein- bzw. Ausklappen des Aufnahmeelements ändert sich die Ausrichtung des der Schwenklagerung abgewandten Abschnitts des Aufnahmeelements gegenüber dem der Schwenklagerung zugewandten Abschnitt. Durch die gleiche Ausrichtung der Schwenkachse, der Drehachse und der Ausgleichs-Schwenkachse kann diese gegenläufig erfolgende Änderung der Ausrichtung der Abschnitte des Aufnahmeelements durch die Drehlagerung bzw. die Schwenklagerung ausgeglichen werden. Der Ausgleichsmechanismus kann zusätzlich oder alternativ zu einer linearen verstellbaren Befestigung des zumindest einen Lagerungselements an dem Förderband vorgesehen sein.

Entsprechend einer bevorzugten Ausgestaltung der Erfindung kann es vorgesehen sein, dass die lineare Verstellung des zumindest einen Lagerungselements und/oder der Ausgleichsmechanismus blockierbar ist. Zur Blockierung kann eine entsprechende Klemmung oder Abbolzung vorgesehen sein. Diese kann beispielsweise zwischen der Führungsschiene und den Führungsklammern und/oder an der Ausgleichs-Gelenkverbindung des Ausgleichsmechanismus wirksam sein. Vorteilhaft kann sich der Aufnahme- und Einstellmechanismus bei in seiner Position eingestelltem Förderband und unabhängig von dem vorgesehenen Stellelement bei entsprechender Blockierung nicht selbstständig verstellen.

Die Erfindung wird im Folgenden anhand eines in den Zeichnungen dargestellten Ausführungsbeispiels näher erläutert. Es zeigen:
- Figur 1: in einer perspektivischen Ansicht eine Material-Verarbeitungseinrichtung mit einer Förderbandanordnung,
- Figur 2: in einer perspektivischen Ansicht die Förderbandanordnung mit einem Förderband und zwei Aufnahmeelementen in einer Arbeitsposition des Förderbandes,
- Figur 3: ein aufgabeseitiges Aufnahmeelement mit einem aufgabeseitigen Lagerungselement für das Förderband,
- Figur 4: eine Detailansicht eines Lagerungsbereichs des in Figur 3 gezeigten, aufgabeseitigen Lagerungselements,
- Figur 5: in einer perspektivischen Schnittdarstellung das aufgabeseitige Lagerungselement,
- Figur 6: in einer perspektivischen Seitenansicht das abwurfseitige Lagerungselement mit einem Ausschnitt des Förderbandes,
- Figur 7: die in Figur 2 gezeigte Förderbandanordnung in einer stärker geneigten und nach außen geschwenkten Arbeitsposition des Förderbandes,
- Figur 8: in einer Draufsicht die in Figur 2 gezeigte Förderbandanordnung,
- Figur 9: in einer perspektivischen Darstellung einen Gabellagerblock zur gelenkigen Montage eines Aufnahmeelements an einem Chassis der Material-Verarbeitungseinrichtung und
- Figur 10: in einer perspektivischen Ansicht entsprechend Figur 2 die Förderbandanordnung mit einem Ausgleichsmechanismus.

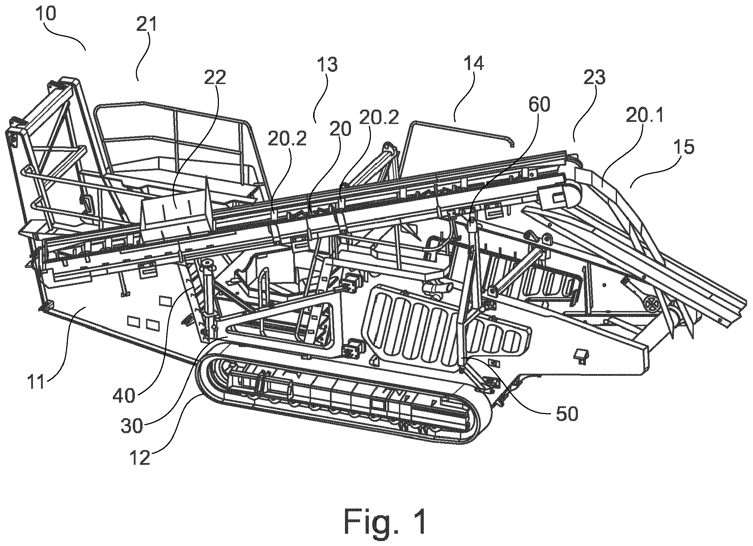

Figur 1 zeigt in einer perspektivischen Ansicht eine vorliegend teilaufgebaute Material-Verarbeitungseinrichtung 10 mit einer Förderbandanordnung. Die Material-Verarbeitungseinrichtung 10 weist ein Chassis 11 auf und ist mittels eines Kettenlaufwerks 12 mobil ausgeführt. Ein Förderband 20 der Förderbandanordnung ist über zwei Aufnahmeelemente 30, 50, die jeweils ein Lagerungselement 40, 60 tragen, an dem Chassis 11 der Material-Verarbeitungseinrichtung 10 schwenkbar gelagert. Das Förderband 20 weist in einem Endabschnitt einen Aufgabebereich 21 und gegenüberliegend einen Abwurfbereich 23 auf. Im Aufgabebereich 21 ist ein Aufgabetrichter 22 angeordnet. Der Aufgabetrichter 22 kann an verschiedenen Position entlang des Förderbandes 20 positioniert und befestigt werden. In dem gezeigten, teilaufgebauten Montagezustand der Material-Verarbeitungseinrichtung 10 ist ein Fördergurt 20.1 noch nicht vollständig auf das Förderband 20 aufgezogen. Dadurch sind schräg angeordnete Muldenrollen 20.2 des Förderbandes 20, welche montiert den Fördergurt 20.1 tragen, zu erkennen. Entlang des Chassis 11 der Material-Verarbeitungseinrichtung 10 sind eine Werkzeugaufnahme 13, ein Aufgabeband-Bereich 14 und ein Aufgabetrichter-Bereich 15 vorgesehen. Im Bereich der Werkzeugaufnahme 13 kann ein Werkzeug zur Bearbeitung des eingebrachten Materials, beispielsweise ein Brecher zur Zerkleinerung von Gesteinsmaterial, angeordnet werden. Das Gesteinsmaterial wird dem Brecher über ein noch nicht montiertes und daher nicht gezeigtes Aufgabeband zugeführt. Das Aufgabeband wird im Aufgabeband-Bereich 14 des Chassis 11 montiert. Endseitig und damit im Aufgabetrichter-Bereich 15 ist bei der fertig montierten Material-Bearbeitungseinrichtung 10 ein Haupt-Aufgabetrichter angeordnet. Über diesen wird das zu bearbeitende Material dem Aufgabeband zugeführt, welches dieses dann an den Brecher transportiert.

In der gezeigten Arbeitsposition der Förderbandanordnung ist das Förderband 20 derart angeordnet, dass der Abwurfbereich 23 bei fertig montierter Material-Verarbeitungseinrichtung 10 oberhalb des Haupt-Aufgabetrichters angeordnet ist. Der Aufgabebereich 21 des Förderbandes 20 ist seitlich von der Material-Verarbeitungseinrichtung 10 wegstehend angeordnet. Dazu sind das aufgabeseitige Aufnahmeelement 30 und das abwurfseitige Aufnahmeelement 50 von dem Chassis 11 weggeschwenkt. In dieser Position kann beispielsweise von einer vorangeschalteten, nicht gezeigten Material-Verarbeitungseinrichtung bereitgestelltes Gesteinsmaterial, beispielsweise mittels eines weiteren Förderbandes, in den Aufgabetrichter 22 und damit auf das Förderband 20 aufgelegt werden. Das Förderband 20 transportiert dieses Material zu dem vorliegend noch nicht montierten Haupt-Aufgabetrichter. Es gelangt so auf das Aufgabeband und von diesem zum Brecher.

Zum Transport der Material-Verarbeitungseinrichtung 10 können die beiden Aufnahmeelemente 30, 50 und damit das Förderband 20 an das Chassis 11 herangeklappt werden.

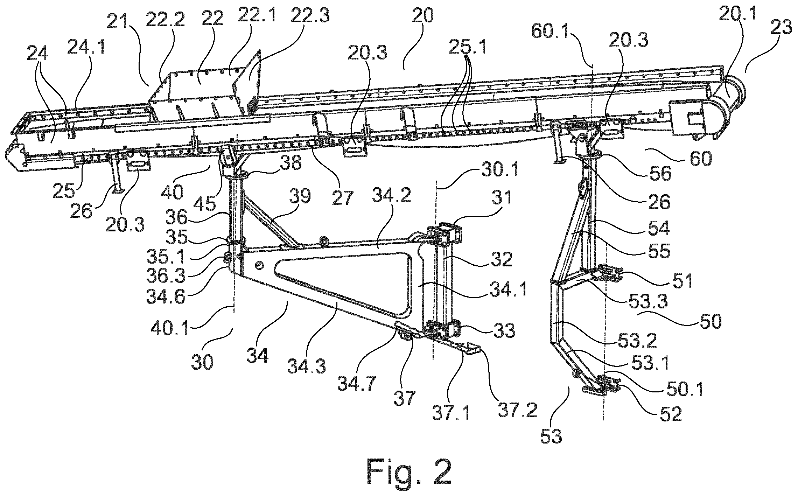

Figur 2 zeigt in einer perspektivischen Ansicht die Förderbandanordnung mit dem Förderband 20 und den zwei Aufnahmeelementen 30, 50 in einer Arbeitsposition des Förderbandes 20. Das aufgabeseitige Aufnahmeelement 30 weist einen aufgabeseitigen Schwenkarm 34 auf. Der aufgabeseitige Schwenkarm 34 ist vorliegend aus einer Vertikalstrebe 34.1, eine Horizontalstrebe 34.2 und einer Schrägstrebe 34.3 gebildet. Die Streben 34.1, 4 und 30.2, 34.3 sind entlang der Außenkanten eines Dreiecks angeordnet und bilden so eine tragfähige Fachwerkstruktur. Der aufgabeseitige Schwenkarm 34 ist an den gegenüberliegenden Enden der Vertikalstrebe 34.1 an jeweils einem Gabellagerblock 31, 33 gehalten. Dadurch ist eine aufgabeseitige Schwenkachse 30.1 gebildet, um welche der aufgabeseitige Schwenkarm 34 schwenkbar ist. Die Gabellagerböcke 31, 33 umgreifen einen in Richtung der Vertikalstrebe 34.1 ausgerichteten Montageträger 32 und sind mittels Schraubverbindungen an das in Figur 1 gezeigte Chassis 11 der Material-Verarbeitungseinrichtung 10 angeschraubt. An dem Chassis 11 sind seitlich beabstandet und gegenüberliegend zu dem zweiten Gabellagerblock 33.2 chassisseitige Stellelement-Ankopplungen 37.2, von denen in der gewählten Darstellung die vordere zu erkennen ist, mit dem Chassis 11 verbunden. Von den chassisseitigen Stellelement-Ankopplungen 37.2 sind gegenüberliegend jeweils eine Kette 37 zu dem aufgabeseitigen Schwenkarm 34 geführt und mit diesem mittels entsprechender Stellelement-Ankopplungen 34.7 verbunden. In die Ketten 37 sind Ratschenspanner 37.1 eingearbeitet. Mit diesen kann die Länge der Ketten 37 verändert werden. Mit Hilfe der Ratschenspanner 37.1 kann somit der Winkel, um den der aufgabeseitige Schwenkarm 34 von dem Chassis 11 weggeklappt ist, eingestellt werden. Es ist an dieser Stelle denkbar, auch andere Stelleinheiten zwischen dem Chassis 11 und dem aufgabeseitigen Schwenkarm 34 vorzusehen, beispielsweise entsprechender Hydraulikzylinder. Ebenso ist es denkbar, auch an dem abwurfseitigen Aufnahmeelement 50 entsprechende Stelleinrichtungen (Ketten 37, Hydraulikzylinder etc.) vorzusehen.

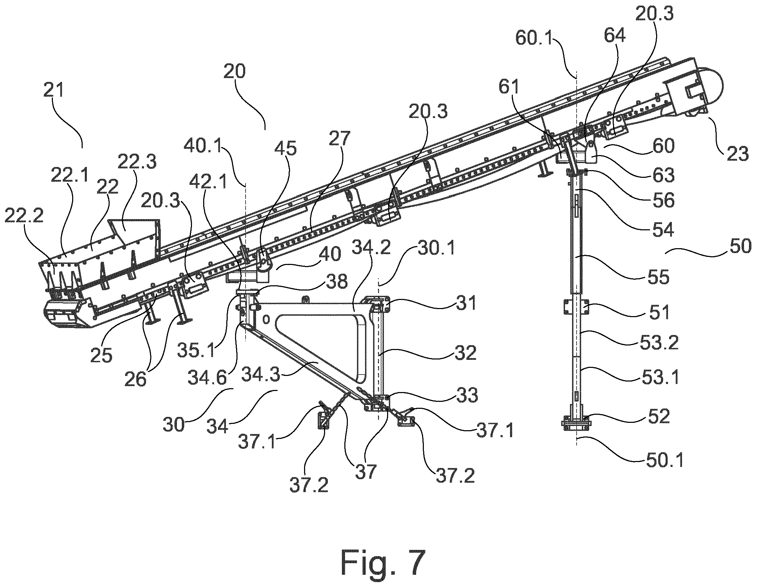

Gegenüberliegend zur aufgabeseitigen Schwenkachse 30.1 weist der Schwenkarm 34 einen Anschlussträger 34.6 auf. Der Anschlussträger 34.6 ist an der endseitigen Verbindung zwischen der Horizontalstrebe 34.2 und der Schrägstrebe 34.3 des aufgabeseitigen Schwenkarms 34 angeordnet. Er ist entlang seiner Längserstreckung zum Förderband 20 hin ausgerichtet. Auf den Anschlussträger 34.6 ist ein Zwischenstück 36 aufgesetzt. Die Verbindung zwischen dem Zwischenstück 36 und dem Anschlussträger 34.6 ist leicht demontierbar ausgeführt, sodass das Zwischenstück 36 einfach ausgebaut werden kann. Dadurch kann die Neigung des Förderbandes 20 verändert werden, wie dies näher zu Figur 7 beschrieben ist. Das Zwischenstück 36 ist mittels einer blockierten Drehlagervorbereitung 35 mit dem Anschlussträger 34.6 verbunden. Dazu weist das Zwischenstück 36 endseitig und dem Anschlussträger 34.6 zugewandt einen unteren Zwischenstückflansch 36.3 auf. Dieser liegt an einem unteren Drehlagerflansch 35.1, welcher endseitig und dem Zwischenstück 36 zugewandt an dem Anschlussträger 34.6 angeordnet ist, an und ist mit diesem fest verbunden, vorzugsweise verschraubt. Zwischen dem Zwischenstück 36 und der Horizontalstrebe 34.2 des aufgabeseitigen Schwenkarms 34 ist eine Stützstrebe 39 vorgesehen. Die Stützstrebe 39 ist ebenfalls leicht demontierbare mit dem Schwenkarm 34 verbunden und dient der Stabilisierung des Zwischenstücks 36.

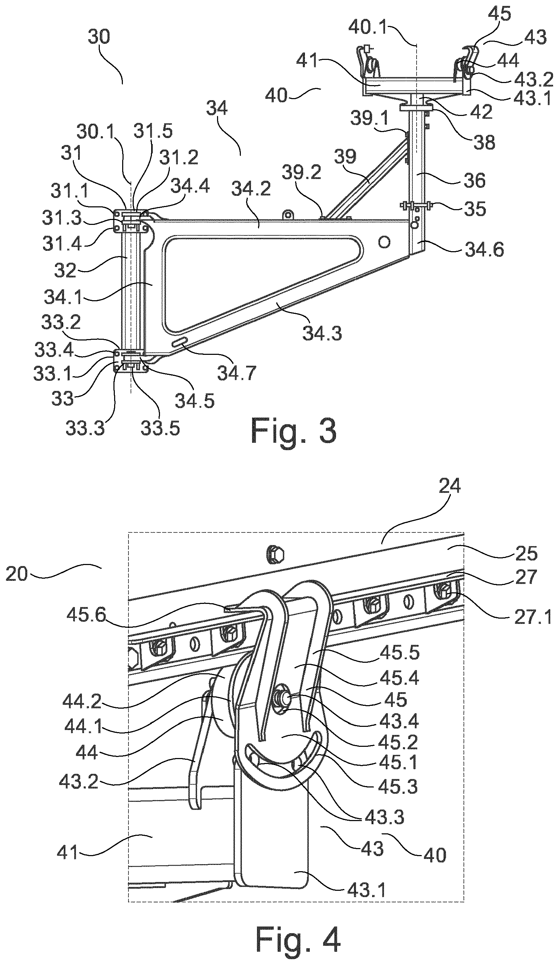

Gegenüberliegend zur blockierten Drehlagervorbereitung 35 bildet eine aufgabeseitige Drehlagerverbindung 38 eine drehbare Verbindung zwischen dem Zwischenstück 36 und dem darauf aufgesetzten, aufgabeseitigen Lagerungselement 40. Diese ermöglicht eine Drehung des aufgabeseitigen Lagerungselements 40 gegenüber dem Zwischenstück 36 um eine aufgabeseitige Drehachse 40.1. Die aufgabeseitige Drehachse 40.1 ist in Richtung der Längserstreckung des Zwischenstücks 34 ausgerichtet. Das aufgabeseitige Lagerungselement 40 ist linear verstellbar mit dem Förderband 20 verbunden, wie dies näher in Figur 4 gezeigt ist. Um ein Abheben des Förderbandes 20 zu vermeiden, weist das aufgabeseitige Lagerungselement 40 seitlich und gegenüberliegend zwei Führungsklammern 45 auf. Diese umgreifen linearverstellbar zwei seitlich und gegenüberliegend an dem Förderband 20 montierte Führungsschienen 27.

In Richtung zum Abwurfbereich 23 des Förderbandes 20 ist dieses durch das abwurfseitige Aufnahmeelement 50 gehalten. Dazu ist ein abwurfseitiger Schwenkarm 53 gelenkig mit dem in Figur 1 gezeigten Chassis 11 verbunden. Der abwurfseitige Schwenkarm 53 ist aus einer unteren Schwenkstrebe 53.1, einer Verbindungsstrebe 53.2 und einer oberen Schwenkstrebe 53.3 gebildet. Die untere und die obere Schwenkstrebe 53.1, 53.3 sind endseitig gelenkig von jeweils einem dritten und vierten Gabellagerblock 51, 52 gehalten. Der dritte und vierte Gabellagerblock 51, 52 sind zueinander fluchtend mit dem in Figur 1 gezeigten Chassis 11 verbunden. Dadurch ist eine abwurfseitige Schwenkachse 50.1 des abwurfseitigen Schwenkarms 53 gebildet. Der abwurfseitige Schwenkarm 53 kann um die abwurfseitige Schwenkachse 50.1 geschwenkt werden. Die untere Schwenkstrebe 53.1 ist, ausgehend von dem vierten Gabellagerblock 52, schräg nach oben weisend ausgerichtet. Die obere Schwenkstrebe 53.3 ist, ausgehend von dem dritten Gabellagerblock 51, quer zur abwurfseitigen Schwenkachse 50.1 ausgerichtet. Endseitig sind die untere Schwenkstrebe 53.1 und die obere Schwenkstrebe 53.3 mittels der Verbindungsstrebe 53.2 verbunden. Der abwurfseitige Schwenkarm 53 ist somit durch eine fachwerkartige Strebenstruktur mit zwei beabstandet übereinander liegenden Schwenklagern gebildet. Dadurch ist eine hohe mechanische Belastbarkeit des abwurfseitigen Schwenkarms 53 gewährleistet.

Auf der oberen Schwenkstrebe 53.3 des Schwenkarms 53 ist eine Lagerstrebe 54 befestigt. Die Lagerstrebe 54 ist entlang ihrer Längserstreckung zum Förderband 20 hin ausgerichtet. Eine dazu schräg angeordnete Querstrebe 55 ist an ihrem einen Ende mit der oberen Schwenkstrebe 53.3 des Schwenkarms 53 und gegenüberliegend mit der Lagerstrebe 54 verbunden. Dadurch wird die Lagerstrebe 54 stabilisiert. Die Position der Lagerstrebe 54 auf der oberen Schwenkstrebe 53.3 ist in Richtung des dritten Gabellagerblock 51 gelegt. Dadurch ergibt sich ein vergleichsweise kleiner Radius, auf dem die Lagerstrebe 54 um die abwurfseitige Schwenkachse 50.1 geschwenkt werden kann. Gleichzeitig ergibt sich entlang der oberen Schwenkstrebe 53.3 gegenüber der abwurfseitigen Schwenkachse 50.1 ein kurzer Hebel für die Montageposition der Lagerstrebe 54 und ein langer Hebel für die Position, an welcher die Verbindungsstrebe 53.2 die obere Schwenkstrebe 53.3 abstützt. Durch dieses Hebelverhältnis können von dem abwurfseitigen Aufnahmeelement 50 hohe, von dem Förderband 20 übertragene Kräfte abgefangen werden.

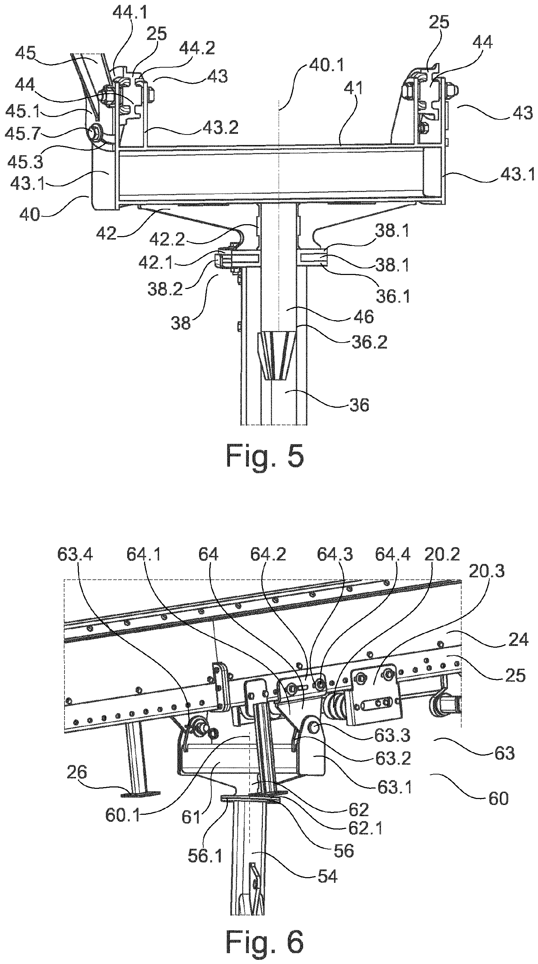

Wie näher in Figur 6 gezeigt ist, ist das abwurfseitige Lagerungselement 60 über eine abwurfseitige Drehlagerverbindung 56 endseitig mit der Lagerstrebe 54 verbunden. Die abwurfseitige Drehlagerverbindung 56 ermöglicht eine Drehung des abwurfseitigen Lagerungselements 60 gegenüber der Lagerstrebe 54 um eine abwurfseitige Drehachse 60.1. Die abwurfseitige Drehachse 60.1 ist dabei in Richtung der Längserstreckung der Lagerstrebe 54 ausgerichtet. Wie in Figur 6 weiter gezeigt ist, ist das abwurfseitige Lagerungselement 60 mittels eines abwurfseitigen Halters 63 und eines drehbar damit verbundenen Lagerelements 64 ortsfest mit dem Förderband 20 verbunden.

Das Förderband 20 selbst weist entlang seiner Längserstreckung zwei seitlich des Fördergurtes 20.1 angeordnete Seitenführungen 24 auf. In die Seitenführungen 24 sind nach innen weisende Montagebohrungen 24.1 eingebracht. Der Aufgabetrichter 22 ist aus zwei beabstandet zueinander schräg angeordneten und gegenüberliegenden Seitenwänden 22.1, einer Rückwand 22.2 und einer Vorderwand 42.3 gebildet. Er liegt an den Seitenführungen 24 des Förderbandes 20 an und ist mit deren Montagebohrungen 24.1 verschraubt. Der Aufgabetrichter 22 kann so an unterschiedlichen Positionen entlang des Förderbandes 20 positioniert und festgelegt werden.

An dem Förderband 20 sind weitere Komponenten montiert. Dazu sind an den unteren Kanten der Seitenführungen 24 entlang der Längserstreckung des Förderbandes 20 Montageschienen 25 angeordnet. In die Montageschienen 25 sind Montagelöcher 25.1 eingebracht. An die Montageschienen 25 sind Stützelemente 26 angeschraubt. Auf diesen kann das nicht montierte Förderband 20 abgesetzt werden. Ebenfalls sind Halteelemente 20.3 an den Montageschienen 25 befestigt. Die Halteelemente 20.3 führen den Fördergurt 20.1 entlang der Unterseite des Förderbandes 20.

Die Position der Lagerstrebe 54 auf der oberen Schwenkstrebe 53.3 definiert den Radius, auf dem das abwurfseitige Lagerungselement 60 um die abwurfseitige Schwenkachse 50.1 geschwenkt werden kann. Die Länge des aufgabeseitigen Schwenkarms 34 gibt den Radius vor, auf dem das aufgabeseitige Lagerungselement 40 um die aufgabeseitige Schwenkachse 30.1 geschwenkt werden kann. Dabei ist der Radius, auf dem das aufgabeseitige Lagerungselement 40 um die aufgabeseitige Schwenkachse 30.1 geschwenkt werden kann, größer gewählt als der Radius, auf dem das abwurfseitige Lagerungselement 60 um die abwurfseitige Schwenkachse 50.1 schwenkbar ist.

Figur 3 zeigt das aufgabeseitige Aufnahmeelement 30 mit dem aufgabeseitigen Lagerungselement 40 für das Förderband 20. Dem ersten Gabellagerblock 31 zugewandt weist der aufgabeseitige Schwenkarm 34 eine erste Lagerplatte 34.4 auf. Die erste Lagerplatte 34.4 ist dabei an dem der Horizontalstrebe 34.2 zugewandten Ende der Vertikalstrebe 34.1 angeordnet. An dem gegenüberliegenden Ende der Vertikalstrebe 34.1 ist eine zweite Lagerplatte 34.5 angeordnet. Die zweite Lagerplatte 34.5 ist zum zweiten Gabellagerblock 33 hin ausgerichtet. Der erste Gabellagerblock 31 weist eine erste Grundplatte 31.1 auf. In die Grundplatte 31.1 sind erste Schraubaufnahmen 31.4 zur Befestigung des ersten Gabellagerblocks 31 an dem Chassis 11 der Material-Verarbeitungseinrichtung 10 eingebracht. An der ersten Grundplatten 31.1 sind übereinanderliegend und beabstandet zueinander ein erster oberer Gelenkkopf 31.2 und ein erster unterer Gelenkkopf 31.3 befestigt. Die erste Lagerplatte 34.4 des aufgabeseitigen Schwenkarms 34 ist zwischen dem ersten oberen Gelenkkopf 31.2 und dem ersten unteren Gelenkkopf 31.3 schwenkbar gehalten. Dazu weisen der erste obere Gelenkkopf 31.2, der erste untere Gelenkkopf 31.3 und die erste Lagerplatte 34.4 zueinander fluchtende Bohrungen auf, durch welche ein erster Gelenkbolzen 31.5 geführt ist. Der zweite Gabellagerblock 33 ist entsprechend dem ersten Gabellagerblock 33 aus einer zweiten Grundplatte 33.2 mit eingeformten, zweiten Schraubaufnahmen 33.4 sowie einem zweiten oberen Gelenkkopf 33.2 und einem zweiten unteren Gelenkkopf 33.3 gebildet. Die zweite Lagerplatte 34.5 des aufgabeseitigen Schwenkarms 34 ist zwischen dem zweiten oberen Gelenkkopf 33.2 und dem zweiten unteren Gelenkkopf 33.3 gehalten und mittels eines zweiten Gelenkbolzens 33.5 gelenkig mit diesen verbunden. Durch die zueinander fluchtend ausgerichteten ersten und zweiten Gelenkbolzen 31.5, 33.5 ist die aufgabeseitige Schwenkachse 30.1 des aufgabeseitigen Schwenkarms 34 gebildet.

Die Stützstrebe 39 ist mittels eines oberen Anschlussflansches 39.1 an dem Zwischenstück 36 und mittels eines unteren Anschlussflansches 39.2 an der Horizontalstrebe 34.2 des Schwenkarms 34 befestigt.

Das aufgabeseitige Lagerungselement 40 ist mittels der aufgabeseitigen Drehlagerverbindung 38 um die aufgabeseitige Drehachse 40.1 drehbar auf das Zwischenstück 36 aufgesetzt. Das aufgabeseitige Lagerungselement 40 weist einen Querträger 41 auf. Der Querträger 41 ist quer zur aufgabeseitigen Drehachse 40.1 ausgerichtet. Dem Zwischenstück 36 zugewandt ist ein Stützelement 42 mit dem Querträger 41 verbunden, über welches der Querträger 41 an die aufgabeseitige Drehlagerverbindung 38 angeschlossen ist. Endseitig sind Halter 43 an dem Querträger 41 angeordnet. Die Halter 43 sind jeweils aus einer äußeren Halterplatte 43.1 und einer inneren Halterplatte 43.2 gebildet. Diese sind seitlich beabstandet zueinander in den jeweiligen Endbereichen des Querträgers 41 angeordnet. Zwischen den Halterplatten 43.1, 43.2 ist jeweils eine Führungsrolle 44 drehbar gelagert.

Figur 4 zeigt eine Detailansicht eines Lagerungsbereichs des in Figur 3 gezeigten, aufgabeseitigen Lagerungselements 40. Entlang der unteren Kante der gezeigten Seitenführung 24 des Förderbandes 20 ist die Montageschiene 25 angeordnet. An der Montageschiene 25 ist die Führungsschiene 27 mit entsprechenden Montageschrauben 27.1 angeschraubt. An dem Querträger 41 des aufgabeseitigen Lagerungselements 40 ist endseitig die äußere Halterplatte 43.1 befestigt. Beabstandet zu der äußeren Halterplatte 43.1 ist die innere Halterplatte 43.2 mit dem Querträger 41 verbunden. Die Führungsrolle 44 ist drehbar zwischen der äußeren Halterplatte 43.1 und der inneren Halterplatte 43.2 gehalten. Dazu ist eine entsprechende Achsschraube 43.4 durch fluchtend angeordnete Bohrungen der Halterplatten 43.1, 43.2 sowie die Nabe der Führungsrolle 44 geführt. Die Führungsrolle 44 weist eine Lauffläche 44.2 und einen nach außen seitlich daran anschließenden Spurkranz 44.1 auf. Das Förderband 20 liegt mit seiner Montageschiene 25 auf der Lauffläche 44.2 der Führungsrolle 44 auf. Seitlich ist das Förderband 20 durch den Spurkranz 44.1 geführt. Die Führungsklammer 45 ist an der äußeren Halterplatte 43.1 befestigt. Sie ist dabei um die Drehachse der Führungsrolle 44 schwenkbar gelagert. Die Führungsklammer 45 weist einen Anflanschabschnitt 45.1 mit einer Bohrung 45.2 auf, durch welche die Achsschraube 43.4 gesteckt ist. Der Anflanschabschnitt 45.1 geht in einen schräg nach außen verlaufenden, mittleren Abschnitt 45.4 der Führungsklammer 45 über. Endseitig ist an dem mittleren Abschnitt 45.4 ein in Richtung zur Montageschiene 25 des Förderbandes 20 hin abgewinkelter Führungsabschnitt 45.6 angeformt. Ausgehend von dem Anflanschabschnitt 45.1 sind zwei Versteifungsstege 45.5 mit dem mittleren Abschnitt 45.4 und dem Führungsabschnitt 45.6 verbunden. In den Anflanschabschnitt 45.3 ist ein bogenförmig um die Drehachse der Führungsrolle 44 ausgebildetes Langloch 45.3 eingeformt. Die äußere Halterplatte 43.1 weist im Bereich des Langlochs 45.3 Fixierbohrungen 43.3 auf. In diese können nicht dargestellt Schrauben eingeschraubt und damit der Drehwinkel der Führungsklammer 45 fixiert werden.

Die Führungsklammer 45 umgreift mit ihrem Führungsabschnitt 45.6 die Führungsschiene 27. Sie ist in ihrem Winkel an die Neigung des Förderbandes 20 angepasst und in dieser Drehposition mit einer in Figur 5 gezeigten Schraube 45.7 an der äußeren Halterplatte 43.1 fixiert. Gegenüberliegend zum Führungsabschnitt 45.6 liegt die untere Kante der Montageschiene 25 auf der Lauffläche 44.2 der Führungsrolle 44 auf. Nach außen hin liegt die Montageschiene 25 an dem Spurkranz 44.1 der Führungsrolle 44 an. An dem gegenüberliegenden Ende des Querträgers 41 ist spiegelbildlich ein gleicher Halter 43 mit einer Führungsrolle 44 und einer Führungsklammer 45 vorgesehen. Ebenfalls ist gegenüberliegend eine Führungsschiene 27 an die dortige Montageschiene 25 angeschraubt. Das Förderband 20 ist somit durch das aufgabeseitige Lagerungselement 40 beidseitig auf den Führungsrollen 44 gelagert, seitlich von den Spurkränzen 44.1 der Führungsrollen 44 geführt und durch das Zusammenwirken der Führungsklammern 45 und der Führungsschienen 27 gegen Abheben gesichert. Dabei erlaubt die Lagerung des Förderbandes 20 auf den Führungsrollen 44 eine einfache lineare Verstellung des Förderbandes 20 gegenüber dem aufgabeseitigen Lagerungselement 40.

Figur 5 stellt in einer perspektivischen Schnittdarstellung das aufgabeseitige Lagerungselement 40 dar. Dabei ist der Schnitt entlang der Längserstreckung des Querträgers 41 und des Zwischenstücks 36 gelegt.

Das Förderband 20 ist mit seinen Montageschienen 25 auf den Führungsrollen 44 linear beweglich gelagert. Die Führungsrollen 44 sind mittels der Achsschrauben 43.4 zwischen den jeweils äußeren und inneren Halterplatten 43.1, 43.2 der Halter 43 drehbar gelagert.

Der Querträger 41 liegt auf dem Stützelement 42 auf und ist mit diesem verbunden. Das Zwischenstück 36 weist zum Stützelement 42 hin einen Drehlagerflansch 36.1 auf. Gegenüberliegend ist an dem Stützelement 42 ein Drehlagergegenflansch 42.1 angeordnet. Zwischen dem Drehlagerflansch 36.1 und dem Drehlagergegenflansch 42.1 sind aufeinanderliegend zwei Gleitscheiben 38.1 angeordnet. Die Gleitscheiben 38.1 sind an ihrem Umfang durch Führungslaschen 38.2 seitlich geführt. Die Führungslaschen 38.2 sind mit dem Drehlagerflansch 36.1 des Zwischenstücks 36 verbunden. In dem Stützelement 42 ist eine Bolzenhalterung 42.2 vorgesehen. Die Bolzenhalterung 42.2 ist als von dem Querträger 41 zu dem Drehlagergegenflansch 42.1 geführte Bohrung ausgeführt. Gegenüberliegend zur Bolzenhalterung 42.2 ist in das Zwischenstück 36 eine Drehbolzenaufnahme 36.2 eingebracht. Die Drehbolzenaufnahme 36.2 ist als in Richtung der Längserstreckung des Zwischenstücks 36 verlaufende Bohrung ausgeführt. In der Drehbolzenaufnahme 36.2 des Zwischenstücks 36 und der Bolzenhalterung 42.2 des Stützelements 42 ist ein Drehlagerbolzen 46 eingeführt. Der Drehlagerbolzen 46 ist in der Drehbolzenaufnahme 36.2 und/oder der Bolzenhalterung 42.2 drehbar gelagert. Durch die zwischen den Gleitscheiben 38.1 ausgebildete Gleitfläche und die drehbare Lagerung des Drehlagerbolzens 46 ist die aufgabeseitige Drehlagerverbindung 38 zwischen dem Zwischenstück 36 und dem aufgabeseitigen Lagerungselement 40 gebildet. Dabei ist durch den Drehlagerbolzen 46 eine hohe mechanische Belastbarkeit der aufgabeseitigen Drehlagerverbindung 38 gegenüber quer zur aufgabeseitigen Drehachse 40.1 auf das aufgabeseitige Lagerungselement 40 einwirkende Kräfte gewährleistet. Der Drehlagerflansch 36.1 und der Drehlagergegenflansch 42.1 bewirken, dass auch hohe, in Richtung der aufgabeseitigen Drehachse 40.1 wirkende Kräfte, wie sie beispielsweise durch die Gewichtskraft des Förderbandes 20 und des darauf transportierten Materials hervorgerufen werden, sicher von dem aufgabeseitigen Lagerungselement 40 auf das Zwischenstück 36 und von dort über den aufgabeseitigen Schwenkarm 34 an das Chassis 11 der Material-Verarbeitungseinrichtung 10 abgeleitet werden können. Die Gleitscheiben 38.1 gewährleisten dabei eine geringe Reibung und dadurch eine leicht gängige Drehbarkeit des aufgabeseitigen Lagerungselements 40 um die aufgabeseitige Drehachse 40.1.

Figur 6 zeigt in einer perspektivischen Seitenansicht das abwurfseitige Lagerungselement 60 mit einem Ausschnitt des Förderbandes 20. Das abwurfseitige Lagerungselement 60 weist einen abwurfseitigen Querträger 61 auf. Dieser ist quer zur abwurfseitigen Drehachse 60.1 und zum Förderband 60 ausgerichtet. Der abwurfseitige Querträger 61 ist auf einem abwurfseitigen Stützelement 62 gelagert. Dieses weist einen abwurfseitigen Drehlagergegenflansch 62.1 auf, der gegenüberliegend zu einem abwurfseitigen Drehlagerflansch 56.1 der Lagerstrebe 54 angeordnet ist. Es ist denkbar, zwischen dem abwurfseitigen Drehlagerflansch 56.1 und dem abwurfseitigen Drehlagergegenflansch 61.1 Gleitscheiben 38.1 vorzusehen, wie sie in Figur 5 für das aufgabeseitige Lagerungselement 40 gezeigt sind. An den gegenüberliegenden Enden des abwurfseitigen Querträgers 61 sind jeweils beabstandet zueinander eine äußere abwurfseitige Halterplatte 63.1 und eine innere abwurfseitige Halterplatte 63.2 mit dem abwurfseitigen Querträger 61 verbunden. Das abwurfseitige Lagerungselement 60 ist somit entsprechend dem aufgabeseitigen Lagerungselement 40, wie es insbesondere zu den Figuren 3 und 5 beschrieben ist, ausgebildet. Die zwischen dem abwurfseitigen Lagerungselement 60 und der Lagerstrebe 54 vorgesehene, abwurfseitige Drehlagerverbindung 56 ist vorzugsweise entsprechend der zu Figur 5 beschriebenen, aufgabeseitigen Drehlagerverbindung 38 aufgebaut. Abweichend zu dem aufgabeseitigen Lagerungselement 40 weist das abwurfseitige Lagerungselement 60 keine Führungsrollen 44 auf. Zwischen den abwurfseitigen äußeren und inneren Halterplatten 63.1, 63.2 ist jeweils ein Lagerabschnitt 64.1 eines Lagerelements 64 angeordnet. An den Lagerabschnitt 64.1 ist ein Montageabschnitt 64.2 angeformt. In den Montageabschnitt 64.2 sind Montageausnehmungen 64.3 eingeformt. Das Lagerelement 64 ist mittels Befestigungsschrauben 64.4, welche durch die Montageausnehmungen 64.3 geführt sind, an die Montageschiene 25 des Förderbandes 20 angeschraubt. Jeweils ein Gelenkbolzen 63.3 verbindet die gegenüberliegend angeordneten Lagerelemente 64 gelenkig mit den zugeordneten, abwurfseitigen Haltern 63. Die Gelenkbolzen 63.3 sind mittels Sicherungssplinten 63.4 axial festgelegt.

Das Förderband 20 ist somit gelenkig, aber linear gehalten, mit dem abwurfseitigen Lagerungselement 60 verbunden. Es kann sowohl um die durch die Gelenkbolzen 63.3 gebildete Achse als auch um die durch die abwurfseitige Drehlagerverbindung 56.1 gebildete, abwurfseitige Drehachse 60.1 geschwenkt werden. Die durch die Gelenkbolzen 63.3 gebildete Achse und die abwurfseitige Drehachse 60.1 stehen quer, vorzugsweise senkrecht, zueinander. Damit kann sowohl die Neigung des Förderbandes 20 als auch dessen Ausrichtung eingestellt werden.

Figur 7 zeigt die in Figur 2 gezeigte Förderbandanordnung in einer stärker geneigten und weiter nach außen geschwenkten Arbeitsposition des Förderbandes 20. Dazu sind die Aufnahmeelemente 30, 50 weiter von dem Chassis 11 der Material-Verarbeitungseinrichtung 10 weggeklappt. Weiterhin sind das in Figur 2 gezeigte Zwischenstück 36 und die zugehörige Stützstrebe 39 demontiert. Das aufgabeseitige Lagerungselement 40 ist unmittelbar auf dem Anschlussträger 34.6 des aufgabeseitigen Schwenkarms 34 gelagert. Dadurch ist die aufgabeseitige Drehlagerverbindung 38 zwischen dem aufgabeseitigen Lagerungselement 40 und dem Anschlussträger 34.6 ausgebildet. Vorzugsweise weist der Anschlussträger 34.6 eine Aufnahme für einen Drehbolzen auf, wie sie in Figur 5 für das Zwischenstück 36 gezeigt ist. Zur Ausbildung der aufgabeseitigen Drehlagerverbindung 38 ist dann ein Drehlagerbolzen 46, wie er in Figur 5 dargestellt ist, in der in Figur 5 gezeigten Bolzenhalterung 42.2 des Stützelements 42 des aufgabeseitigen Lagerungselements 40 und der Aufnahme für den Drehbolzen in dem Anschlussträger 34.6 angeordnet. Es ist denkbar, auch hier Gleitscheiben 38 zwischen dem unteren Drehlagerflansch 35.1 des Anschlussträgers 34.6 und dem Drehlagergegenflansch 42.1 des aufgabeseitigen Lagerungselements 40 anzuordnen, um eine leichtgängige Drehverbindung zwischen dem aufgabeseitigen Schwenkarm 34 und dem aufgabeseitigen Aufnahmeelement 30 zur erhalten. Damit ist die zwischen dem aufgabeseitigen Lagerungselement 40 und dem Anschlussträger 34.6 ausgebildete, aufgabeseitige Drehlagerverbindung 38 gleich aufgebaut wie die in Figur 5 gezeigte, aufgabeseitige Drehlagerverbindung 38 zwischen dem aufgabeseitigen Lagerungselement 40 und dem Zwischenstück 36. Das Zwischenstück 36 kann daher einfach entfernt und das aufgabeseitige Lagerungselement 40 drehbar mit dem Anschlussträger 34.6 verbunden werden. Dabei bleiben die Position und die Ausrichtung der aufgabeseitigen Drehachse 40.1 gegenüber dem aufgabeseitigen Schwenkarm 34 erhalten.

Durch die Wegnahme oder den Einbau des Zwischenstücks 36 kann die Neigung des Förderbandes 20 verändert werden. Dadurch kann sowohl die Arbeitshöhe des Aufgabebereichs 21 als auch die des Abwurfbereiches 23 verändert werden. Es ist denkbar, an Stelle des Zwischenstücks 36 einen Linearaktuator zwischen dem aufgabeseitigen Schwenkarm 34 und dem aufgabeseitigen Lagerungselement 40 anzuordnen. Ein solcher Linearaktuator, beispielsweise in Form eines Hydraulikzylinders, ermöglicht eine kontinuierliche Einstellung der Neigung des Förderbandes 20. Ebenfalls denkbar ist es, Zwischenstücke 36 in unterschiedlichen Längen vorzusehen und nach Bedarf zwischen dem Anschlussträger 34.6 und dem aufgabeseitigen Lagerungselement 40 einzubauen.

Durch die Verstellung der Neigung des Förderbandes 20 ist es erforderlich, die Ausrichtung der Führungsklammern 45 an die Neigung der Führungsschiene 27 anzupassen. Dazu wird die in Figur 5 gezeigte Schraube 45.7, mit welcher die Drehung Führungsklammer 45 gegenüber dem Halter 43 blockiert ist, gelöst und die Führungsklammer 45 entsprechend eingestellt.

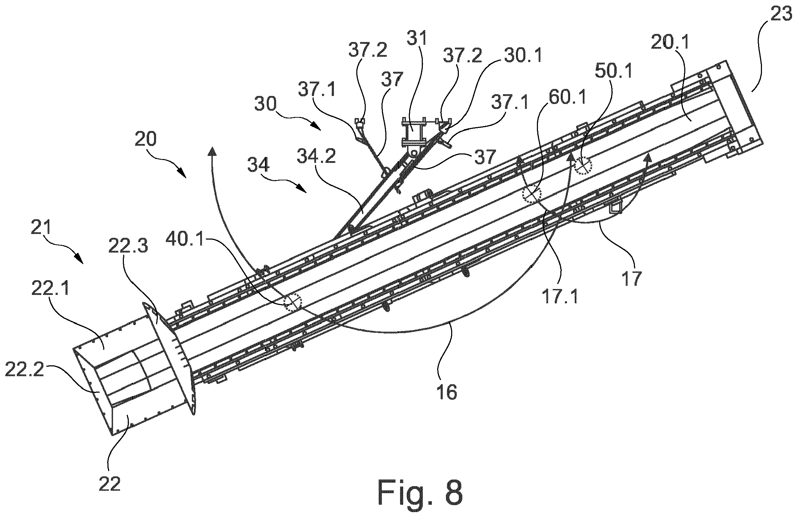

Figur 8 zeigt in einer Draufsicht die in Figur 2 gezeigte Förderbandanordnung in einer Arbeitsposition. Das aufgabeseitige Aufnahmeelement 30 ist mittels der in ihrer Länge verstellbaren Ketten 37 von dem in Figur 1 gezeigten Chassis 11 der Material-Verarbeitungseinrichtung 10 weggeschwenkt. Auch das abwurfseitige Aufnahmeelement 50 ist von dem Chassis 11 weggeschwenkt. Dabei ist das abwurfseitige Aufnahmeelement 50 mit dem abwurfseitigen Lagerungselement 60 von dem darüber angeordneten Förderband 20 verdeckt.

Ein aufgabeseitiger und ein abwurfseitiger Schwenkbereich 16, 17 des Förderbandes ist jeweils durch einen Doppelpfeil markiert. Dabei ist der aufgabeseitige Schwenkbereich 16 durch den Radius, auf dem die aufgabeseitige Drehachse 40.1 des aufgabeseitigen Stützelements 40 um die aufgabeseitige Schwenkachse 30.1 des aufgabeseitigen Aufnahmeelements 30 geschwenkt werden kann, gegeben. Entsprechend verläuft der abwurfseitigen Schwenkbereichs 17 entlang des Radius, auf dem die abwurfseitige Drehachse 60.1 des abwurfseitigen Stützelements 60 um die abwurfseitige Schwenkachse 50.1 des abwurfseitigen Aufnahmeelements 50 geführt ist. Der aufgabeseitige Schwenkradius ist größer gewählt als der abwurfseitige Schwenkradius. Dadurch kann der Aufgabebereich 21 des Förderbandes von der Material-Verarbeitungseinrichtung 10 weggeklappt werden, während der Abwurfbereich 23 über die Material-Verarbeitungseinrichtung 10 und dort über die gewünschte Abwurfstelle geführt wird.

Um eine möglichst große Verstellung des Förderbandes 20 bei einer Schwenkung eines Aufnahmeelements 30, 50 zu erreichen ist es vorteilhaft, wenn die Schwenkarme 34, 53 in etwa in Richtung des Förderbandes 20 und möglichst nicht quer zum Förderband 20 ausgerichtet sind, wie dies in der gewählten Darstellung durch den aufgabeseitigen Schwenkarm 34 gezeigt ist. Bei einer solchen Ausrichtung der Schwenkarme 34, 53 bewirkt eine vergleichsweise geringe Winkeländerung eines Aufnahmeelements 30, 50 eine große Positionsänderung des Förderbandes 20. Es ergibt sich somit jeweils ein bevorzugter Schwenkbereich 17.1 der Aufnahmeelemente 30, 50 gegenüber dem Förderband 20, wie dies durch einen entsprechenden Doppelpfeil für das abwurfseitige Aufnahmeelement 30 gezeigt ist.

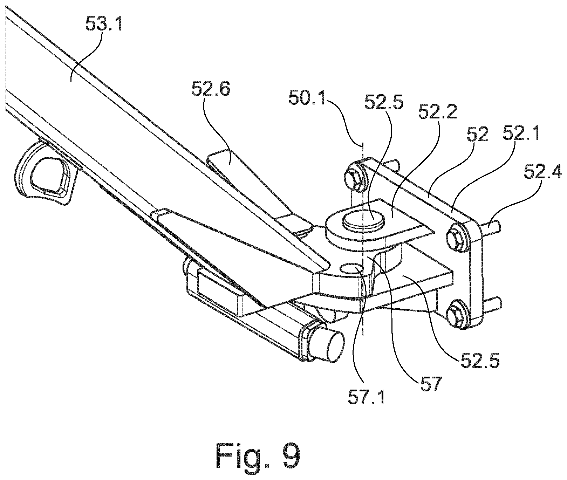

Figur 9 zeigt in einer perspektivischen Darstellung einen Gabellagerblock (vierter Gabellagerbock 52) zur gelenkigen Montage eines Aufnahmeelements 30, 50 an dem Chassis 11 der Material-Verarbeitungseinrichtung 10.

Der vierte Gabellagerbock 52 weist eine vierte Grundplatte 52 auf. Diese ist mittels vier Montageschrauben 52.4 an dem in Figur 1 gezeigten Chassis 11 der Material-Verarbeitungseinrichtung 10 angeschraubt. An der Grundplatte 52 sind beabstandet zueinander zwei Gelenkköpfe 52.2, 52.3 angebracht. Zwischen den Gelenkköpfen 52.2, 52.3 ist eine vierte Lagerplatte 57 angeordnet. Die vierte Lagerplatte 57 ist mittels eines vierten Gelenkbolzens 52.5 gelenkig mit den Gelenkköpfen 52.2, 52.3 verbunden. Dabei bildet die Mittellinie des vierten Gelenkbolzens 52.5 die abwurfseitige Schwenkachse 50.1 des abwurfseitigen Aufnahmeelements 50 aus. Gegenüberliegend ist die vierte Lagerplatte 57 mit der unteren Schwenkstrebe 53.1 des abwurfseitigen Schwenkarms 53 verbunden. Der vierte untere Gelenkkopf 52.3 weist eine größere Fläche als der vierte obere Gelenkkopf 52.2 auf und steht entsprechend über diesen über. In dem Überstandsbereich sind Arretierbohrungen 57.1 in die vierte Lagerplatte 57 und den vierten unteren Gelenkkopf 52.3 eingeformt. Ein Arretierbolzen 52.6 ist durch zwei fluchtend zueinander angeordnete Arretierbohrungen 57.1 des vierten unteren Gelenkkopfes 52.3 und der vierten Lagerplatte 57 gesteckt. Dadurch ist die Schwenkbewegung des abwurfseitigen Aufnahmeelements 50 um die abwurfseitige Schwenkachse 50.1 blockiert.

Vorzugsweise ist sowohl bei dem aufgabeseitigen als auch bei dem abwurfseitigen Aufnahmeelement 30, 50 ein Gabellagerblock 31, 33, 51, 52 blockierbar ausgeführt.

Die Funktion der Förderbandanordnung wird nachfolgend mit Bezug auf die Figuren 1 bis 9 dargelegt. Zum Transport der Material-Verarbeitungseinrichtung 10 wird das Förderband 20 an das Chassis 11 der Material-Verarbeitungseinrichtung 10 herangeklappt und dort arretiert. Zur Einstellung der Arbeitsposition des Förderbandes wird zunächst die Arretierung gelöst. Anschließend werden das aufgabeseitige Aufnahmeelement 30 und das abwurfseitige Aufnahmeelement 50 von dem Chassis 11 weggeklappt. Dies erfolgt vorliegend mit Hilfe der in ihrer Länge einstellbaren Ketten 37. Durch die Schwenkung des aufgabeseitigen Aufnahmeelements 37 um die aufgabeseitige Schwenkachse 30.1 wird der Aufgabebereich 21 des Förderbandes 20 von der Material-Verarbeitungseinrichtung 10 in die gewünschte Richtung geschwenkt. Durch die Schwenkung des abwurfseitigen Aufnahmeelements um die abwurfseitige Schwenkachse 50.1 wird der Abwurfbereich 23 des Förderbandes 20 über der Material-Verarbeitungseinrichtung 10 eingestellt. Ist die gewünschte Arbeitsposition des Förderbandes 20 erreicht, wird diese durch Arretierbolzen 52.6 an zumindest einem Gabellagerbock 31, 33, 51, 52 der Aufnahmeelemente 30, 50 blockiert.

Ist es erforderlich, die Neigung des Förderbandes 20 zu verändern, beispielsweise um den Aufgabebereich 21 oder den Abwurfbereich höher oder niedriger anzuordnen, so wird das Zwischenstück 36 mit der zugeordneten Stützstrebe 39 ein- bzw. ausgebaut. Vorteilhaft kann das aufgabeseitige Lagerungselement 40 sowohl mit dem Zwischenstück 36 als auch mit dem Anschlussträger 34.6 drehbar verbunden werden. Um ein Verklemmen der Führungsklammer 45 an der Führungsschiene 27 zu vermeiden ist deren Ausrichtung einstellbar. Die Führungsklammer 45 kann dabei so verstellt werden, dass deren Führungsabschnitt 45.6 die gleiche Neigung wie die Führungsschiene 27 aufweist.

Beim Aus- und Einklappen des Förderbandes 20 können die Aufnahmeelemente 30, 50 in unterschiedliche Winkel gegenüber dem Chassis 11 eingestellt werden. Dadurch ergibt sich eine Änderung des Abstandes zwischen den beiden Lagerungselementen 40, 60. Um dies ausgleichen zu können ist das aufgabeseitige Lagerungselement 40 linear verschiebbar mit dem Förderband 20 verbunden. Es ist jedoch auch denkbar, dass das abwurfseitige Lagerungselement 60 oder beide Lagerungselemente 40, 60 linear beweglich mit dem Förderband 20 verbunden sind.

Beim Schwenken der Aufnahmeelemente 30, 50 ändert sich der Winkel der Aufnahmeelemente 30, 50 gegenüber dem Förderband 20. Um dies auszugleichen sind die Lagerungselemente 40, 60 um die jeweiligen Drehachsen 40.1, 60.1 drehbar gegenüber den zugeordneten Schwenkarmen 34, 53 gelagert.

Der wesentliche Vorteil der erfindungsgemäßen Förderbandanordnung liegt darin, dass der Winkel und der Abwurfbereich 23 des Förderbandes 20 gegenüber der Material-Verarbeitungseinrichtung 10 über die Winkelveränderung der Aufnahmeelemente 30, 50 eingestellt werden kann. Dadurch kann zum einen der Aufgabebereich 21 des Förderbandes 20 zu einer vorgeschalteten Anlage eingestellt werden. Zum anderen kann der Abwurfbereich 23 des Förderbandes 20 zur Material-Verarbeitungseinrichtung 10 eingestellt werden. Ist es beispielsweise vorgesehen, dass das Förderband 20 Material zu einem Haupt-Aufgabetrichter der Material-Verarbeitungseinrichtung 10 transportiert, so ist es erforderlich, das Material möglichst gleichmäßig auf den Haupt-Aufgabetrichter aufzugeben. Eine einseitige Aufgabe hätte den Nachteil, dass ein nachfolgend angeordneter Brecher ungleichmäßig beschickt wird. Dies kann durch die exakte Ausrichtung des Förderbandes 20 gegenüber dem Haupt-Aufgabetrichter erreicht werden.

Zur optimale Einstellung des Förderbandes 20 ist es von Vorteil, wenn die Schwenkbereiche 15, 16 so groß wie möglich gewählt werden. Weiterhin ist es von Vorteil, wenn die Schwenkarme 34, 53 in etwa in Richtung des Förderbandes 20 und möglichst nicht quer zum Förderband 20 ausgerichtet sind. Bei einer solchen Ausrichtung der Schwenkarme 34, 53 bewirkt eine vergleichsweise geringe Winkeländerung eines Aufnahmeelements 30, 50 eine große Positionsänderung des Förderbandes 20.

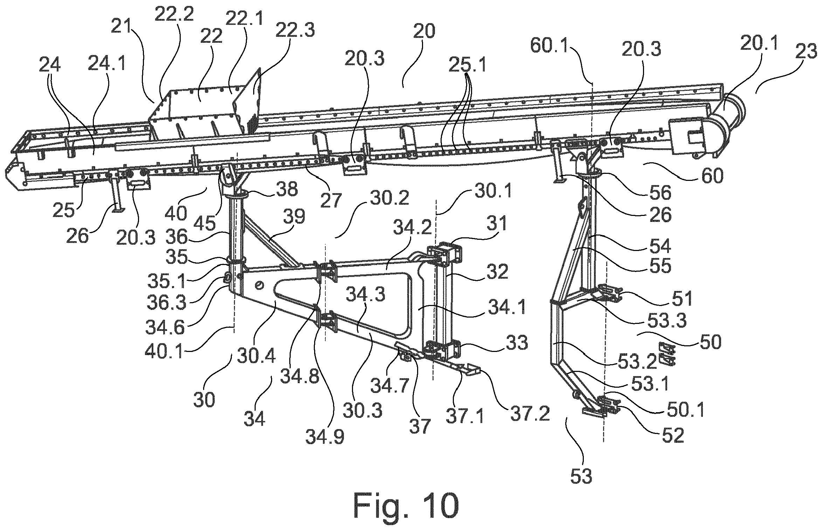

Figur 10 zeigt in einer perspektivischen Ansicht entsprechend Figur 2 die Förderbandanordnung mit einem Ausgleichsmechanismus. Gleiche Bauteile und Baugruppen sind entsprechend Figur 2 gleich bezeichnet. Für nicht veränderte Bauteile und Baugruppen wird entsprechend auf die vorangestellte Beschreibung verwiesen.

Abweichend zu Ausführungsvariante gemäß Figur 2 weist die Anordnung gemäß Figur 3 einen zusätzlichen Ausgleichsmechanismus an dem aufgabeseitigen Aufnahmeelement 30 auf. Der Ausgleichsmechanismus ist durch eine Ausgleichs-Gelenkverbindung zwischen einem der Schwenklagerung des aufgabeseitigen Aufnahmeelements 30 zugewandten Abschnitt 30.3 und einem von der Schwenklagerung abgewandten Abschnitt 30.4 des aufgabeseitigen Aufnahmeelements 30 gebildet. Die Ausgleichs-Gelenkverbindung ist durch zwei fluchtend zueinander angeordnete Ausgleichsgelenke 34.8, 34.9 gebildet. Dabei ist das erste Ausgleichsgelenk 34.8 in der Horizontalstrebe 34.2 und das zweite Ausgleichsgelenk 34.9 in der Schrägstrebe 34.3 des aufgabeseitigen Schwenkarms 34 angeordnet. Die Ausgleichsgelenke 34.8, 34.9 bilden eine Ausgleichs-Schwenkachse 30.2 aus. Der von der Schwenklagerung abgewandte Abschnitt 30.4 des aufgabeseitigen Aufnahmeelements 30 kann gegenüber dem der Schwenklagerung zugewandten Abschnitt 30.3 um die Ausgleichs-Schwenkachse 30.2 geschwenkt werden. Dadurch verändert sich der Abstand zwischen der aufgabeseitigen Schwenkachse 30.1 und dem Anschlussträger 34.6 bzw. der aufgabeseitigen Drehachse 40.1 bzw. dem aufgabeseitigen Lagerungselement 40. Durch Einschwenken des von der Schwenklagerung abgewandten Abschnitts 30.4 um die Ausgleichs-Schwenkachse 30.2 kann somit der Abstand zwischen den beiden Lagerungselementen 40, 60 verändert werden, wodurch die voneinander unabhängige Schwenkung der Aufnahmeelemente 30, 50 ermöglicht wird. Vorliegend ist auch das aufgabeseitige Lagerungselement 40 linear beweglich mit dem Förderband 20 verbunden. Bei Vorliegen des erfindungsgemäßen Ausgleichsmechanismus ist es denkbar, das aufgabeseitige Lagerungselement 40 auch ortsfest mit dem Förderband 20 zu verbinden, wie dies für das abwurfseitige Lagerungselement 60 gezeigt ist. Der Ausgleich der Abstandsänderung zwischen den beiden Lagerungselementen 40, 60 erfolgt dann ausschließlich über den Ausg leichsmechan ismus.

## Patentansprüche

1. Förderbandanordnung einer Material-Verarbeitungseinrichtung (10) mit einem Förderband (20) und einem Aufnahme- und Einstellmechanismus des Förderbandes (20), wobei das Förderband (20) einen Aufgabebereich (21) und einen Abwurfbereich (23) aufweist,
wobei das Förderband (20) mit dem Aufnahme- und Einstellmechanismus zwischen einer Arbeitsposition und einer Transportposition schwenkbar an der Material-Verarbeitungseinrichtung (10) befestigbar ist,
wobei das Förderband (20) auf zumindest zwei Lagerungselementen (40, 60) des Aufnahme- und Einstellmechanismus gelagert ist und
wobei die Lagerungselemente (40, 60) mittelbar oder unmittelbar an jeweils einem Aufnahmeelement (30, 50) des Aufnahme- und Einstellmechanismus um Drehachsen (40.1, 60.1) drehbar gelagert sind,
**dadurch gekennzeichnet,**
**dass** die Aufnahmeelemente (30, 50) jeweils an eine Schwenklagerung mit je einer Schwenkachse (30.1, 50.1) zur schwenkbaren Befestigung an der Material-Verarbeitungseinrichtung (10) angekoppelt sind,
und das zwischen dem Förderband (20) und der Schwenklagerung zumindest eines Aufnahmeelements (30, 50) ein Ausgleichsmechanismus vorgesehen ist, mit dem eine Abstandsänderung zwischen den Lagerungselementen (40, 60) ausgleichbar ist.

2. Förderbandanordnung nach Anspruch 1, **dadurch gekennzeichnet, dass** zumindest ein Lagerungselement (40, 60) ortsfest mit dem Förderband (20) verbunden ist.

3. Förderbandanordnung nach Anspruch 1 oder 2, **dadurch gekennzeichnet, dass** das zum Aufgabebereich (21) hin angeordnete, aufgabeseitige Lagerungselement (40) auf einem größeren Radius um die aufgabeseitige Schwenkachse (30.1) schwenkbar angeordnet ist als das zum Abwurfbereich (23) hin ausgerichtete, abwurfseitige Lagerungselement (60) um die abwurfseitige Schwenkachse (50.1).

4. Förderbandanordnung nach einem der Ansprüche 1 bis 3, **dadurch gekennzeichnet, dass** zumindest ein Lagerungselement (40, 60) linear verstellbar mit dem Förderband (20) verbunden ist.

5. Förderbandanordnung nach Anspruch 4, **dadurch gekennzeichnet, dass** das linear verstellbar mit dem Förderband (20) verbundene Lagerungselement (40) dem Förderband (20) zugewandt Führungsrollen (44) aufweist, auf denen das Förderband (20) gelagert ist, wobei vorzugsweise vorgesehen ist,
dass die Führungsrollen (44) Laufflächen (44.2) aufweisen, auf denen das Förderband (20) gelagert ist, und/oder dass die Führungsrollen (44) Spurkränze (44.1) aufweisen, an denen das Förderband (20) seitlich geführt ist.

6. Förderbandanordnung nach einem Anspruch 5, **dadurch gekennzeichnet, dass** seitlich an dem Förderband (20) gegenüberliegend zumindest abschnittsweise Führungsschienen (27) angeordnet sind und dass an dem linear verstellbar mit dem Förderband (20) verbundenen Lagerungselement (40, 60) Führungsklammern (45) angeordnet sind, welche die Führungsschienen (27) zumindest teilweise umgreifen.

7. Förderbandanordnung nach Anspruch 6, **dadurch gekennzeichnet, dass** die Führungsklammern (45) um eine quer zur Längserstreckung der Führungsschiene (27) verlaufenden Achse in ihrem Winkel gegenüber dem Lagerungselement (40, 60) einstellbar sind.

8. Förderbandanordnung nach einem der Ansprüche 1 bis 7, **dadurch gekennzeichnet, dass** das Förderband (20) über eine quer zu den Drehachsen (40.1, 60.1) der Lagerungselemente (40, 60) verlaufende Achse schwenkbar mit dem zumindest einen ortsfest mit dem Förderband (20) verbundenen Lagerungselement (40, 60) verbunden ist.

9. Förderbandanordnung nach einem der Ansprüche 1 bis 8, **dadurch gekennzeichnet, dass** zwischen den Lagerungselementen (40, 60) und dem jeweiligen Aufnahmeelement (30, 50) eine als Gleitlager ausgebildete Drehlagerverbindung (38, 56) angeordnet ist und/oder dass zwischen den Lagerungselementen (40, 60) und dem jeweiligen Aufnahmeelement (30, 50) aneinanderliegende Gleitscheiben (38.1) angeordnet sind.

10. Förderbandanordnung nach einem der Ansprüche 1 bis 9, **dadurch gekennzeichnet, dass** die Lagerungselemente (40, 60) mittelbar oder unmittelbar an jeweils einem Schwenkarm (34, 53) eines jeweiligen Aufnahmeelements (30, 50) drehbar befestigt sind und dass der Abstand zwischen zumindest einem Lagerungselement (40, 60) und einem zugeordneten Schwenkarm (34, 53) veränderbar ist, und/oder
dass der Abstand zwischen dem zumindest einen Lagerungselement (40, 60) und dem zugeordneten Schwenkarm (34, 53) durch Ein- und Ausbau zumindest eines Zwischenstücks (36) und/oder mittels zumindest eines Aktuators veränderbar ist.

11. Förderbandanordnung nach Anspruch 9 oder 10, **dadurch gekennzeichnet, dass** die Drehlagerverbindung (38, 56) bei eingebautem Zwischenstück (36) zwischen dem zumindest einen Lagerungselement (40, 60) und dem Zwischenstück (36) und bei ausgebautem Zwischenstück (36) zwischen dem zumindest einen Lagerungselement (40, 60) und dem zugeordneten Schwenkarm (34, 53) ausgebildet ist.

12. Förderbandanordnung nach einem der Ansprüche 1 bis 11, **dadurch gekennzeichnet, dass** an zumindest einem Aufnahmeelement (30, 50) zumindest ein Stellelement, insbesondere eine Linearaktuator und/oder zumindest eine in ihrer Länge verstellbare Kette (37) und/oder zumindest ein in seiner Länge verstellbares Seil, und/oder zumindest ein in seiner Länge verstellbarer Zug-/Druckstab zur Schwenkung des Aufnahmeelements (30, 50) um die Schwenkachse (30.1, 50.1) angeordnet ist.

13. Förderbandanordnung nach einem der Ansprüche 1 bis 12, **dadurch gekennzeichnet, dass** die Drehachsen (40.1, 60.1) der Lagerungselemente (40, 60) in Richtung der Schwenkachsen (30.1, 50.1) der Aufnahmeelemente (30, 50) ausgerichtet sind, und/oder
dass die Schwenkbewegung zumindest eines Aufnahmeelements (30, 50) blockierbar ist.

14. Förderbandanordnung nach einem der Ansprüche 1 bis 13, **dadurch gekennzeichnet, dass** das aufgabeseitige Lagerungselement (40) linear verstellbar mit dem Förderband (20) verbunden ist und/oder dass das der Abstand zwischen dem aufgabeseitigen Lagerungselement (40) und dem aufgabeseitigen Schwenkarm (34) veränderbar ist.

15. Förderbandanordnung nach einem der Ansprüche 1 bis 14, **dadurch gekennzeichnet, dass** zumindest ein Aufnahmeelement (30, 50) eine Ausgleichs-Gelenkverbindung aufweist, mit der ein der Schwenklagerung abgewandter Abschnitt (30.4) des Aufnahmeelements (30, 50) gegenüber einem der Schwenklagerung zugewandten Abschnitt (30.3) geschwenkt werden kann, und/oder
dass die lineare Verstellung des zumindest einen Lagerungselements (40, 60) und/oder der Ausgleichsmechanismus blockierbar ist.
